# EUROPÄISCHE PATENTSCHRIFT

(11) **EP 0 530 223 B1**
(45) Veröffentlichungstag und Bekanntmachung des Hinweises auf die Patenterteilung: **09.03.1994**
(21) Anmeldenummer: 91908952.4
(22) Anmeldetag: 17.05.1991
(51) Int. Cl.: C03B 33/12, B28D 1/22, B25B 7/02, E04F 21/18

(54) **BEISSZANGE**
PAIR OF PINCERS
TENAILLE

(30) Priorität: 21.05.1990 DE 4016310
(43) Veröffentlichungstag der Anmeldung: 10.03.1993
(73) Patentinhaber: JOSEF BOHLE STIFTUNG + CO. KG., D-42755 Haan (DE)
(72) Erfinder: SIEBENLIST, Bernd, D-4154 Tönisvorst (DE)
(74) Vertreter: Lippert, Hans-Joachim, Dipl.-Ing.
(86) Internationale Anmeldenummer: DE9100399
(87) Internationale Veröffentlichungsnummer: WO9117964

(56) Entgegenhaltungen:
- CH-A- 328 340
- DE-B- 2 831 425
- DE-U- 9 005 751

## Beschreibung

Die Erfindung betrifft eine Beißzange, insbesondere zum Zertrennen von Glasscheiben, Fliesen und dergleichen, mit zwei langen Betätigungshebeln, zwei kürzeren Druckhebeln sowie an den Arbeitsenden der Druckhebel lösbar befestigten Beißwerkzeugen, die mit aufeinander zu gerichteten und aufeinander zu und voneinander weg bewegbaren Schneiden versehen sind.

Bei einer bekannten Fliesenbeißzange (DE-A 32 12 624) sind an die Druckhebel senkrecht zu diesen verlaufende und aufeinander zu gerichtete Abwinklungen angeformt, an denen die Schneiden einstückig, also unlösbar, ausgebildet sind. Bei dieser bekannten Konstruktion bestehen die Schneidwerkzeuge aus dem gleichen Material wie die Hebel und müssen durch komplizierte Wärmebehandlungen und Schleifarbeiten an ihren Verwendungszweck angepaßt werden. Dabei muß der gesamte Hebelmechanismus den Fertigungsgang der Schneidwerkzeuge mit durchlaufen.

Bei einer bekannten Kneifzange der eingangs genannten Art zum Verdrillen und Abschneiden von Drahtenden (DE-B 28 31 425) sind die Schneidwerkzeuge als gesonderte Platten ausgebildet, die an den Druckhebeln der Zange mit Hilfe von Schrauben befestigbar sind.

Ausgehend von dem bekannten Stand der Technik liegt der Erfindung die Aufgabe zugrunde, eine Beißzange der eingangs genannten Art zu schaffen, bei der die Beißwerkzeuge mit relativ geringem Aufwand immer scharf gehalten werden können.

Erfindungsgemäß wird diese Aufgabe dadurch gelöst, daß die Beißwerkzeuge aus Schneidrädern bestehen und daß die Schneidräder in verschiedenen oder beliebigen Rotationsstellungen relativ zu den Arbeitsenden der Druckhebel befestigbar sind.

Bei der erfindungsgemäßen Konstruktion können die die Beißwerkzeuge bildenden Schneidräder unabhängig von der Hebelkonstruktion hergestellt und bearbeitet werden. Das Anbringen der Beißwerkzeuge an den Druckhebeln erfolgt erst, wenn die Schneidräder komplett fertiggestellt sind. Dadurch kann das Herstellungsverfahren erheblich erleichtert werden.

Darüber hinaus besteht bei der erfindungsgemäßen Konzeption der Vorteil, daß es nicht nur möglich ist, die verbrauchten Schneidräder durch neue scharfe Schneidräder auszutauschen, sondern die Schneidräder können über ihren gesamten Umfang ausgenutzt werden. Bevor also ein Schneidrad als stumpf gilt und ausgetauscht werden muß, kann es je nach Anwendungsfall in 12 bis 24 verschiedene Stellungen gebracht werden, in denen immer wieder ein scharfer Schneidbereich zur Verfügung steht.

Durch die Anwendung von Schneidrädern als Beißwerkzeuge wird auch ein überraschender neuer technischer Effekt erzielt. Zur Ausführung eines Beißvorganges sind jetzt durch die Betätigungsperson wesentlich geringere Kräfte aufzubringen, so daß das neue Gerät besonders armschonend ist. Durch das leichtere und angenehmere Arbeiten mit den gebogenen Schneiden ist auch ein wesentlich genaueres und gezielteres Arbeiten möglich. Darüber hinaus ist das neue Werkzeug auch von ungeübten Personen leicht und angenehm zu betätigen. Insbesondere für die Tiffanytechnik wird durch die Erfindung ein neues Werkzeug geschaffen, welches alle Erwartungen übertrifft.

Die Schneidräder sind in vorgegebenen oder in beliebigen Rotationsstellungen relativ zu den Arbeitsenden der Druckhebel befestigbar, wobei die Schneidräder, nachdem der Arbeitsbereich stumpf geworden ist, um einen beliebigen Winkel gedreht und dann erneut befestigt werden können. Dadurch ist es möglich, den gesamten Umfang der Schneidräder je nach Anwendungsfall voll zu nutzen und dadurch die Lebensdauer der Beißzange um ein Vielfaches zu erhöhen.

Als Einstellhilfe können an den Schneidrädern Winkeleinstellungen vorgesehen sein, die für die Bedienungsperson das Weiterdrehen der Schneidräder um einen vorgegebenen Winkel erleichtert.

Zur Befestigung der Schneidräder können diese eine mittige Bohrung aufweisen und mit Hilfe von je einer Schraube an den Arbeitsenden der Druckhebel festgeschraubt sein. Eine solche Befestigungsart ist äußerst unproblematisch und erleichtert auch das Verstellen der Schneidräder nach Verschleiß des jeweiligen Arbeitsbereichs.

Jedes Schneidrad weist zweckmäßig von der umlaufenden Schneide aus nach beiden Seiten geneigte Abschrägungen auf. Dabei kann jedes Schneidrad die Form eines aus zwei Kegelstümpfen zusammengesetzten Rundlings aufweisen, wobei die beiden Grundflächen der Kegelstümpfe den gleichen Durchmesser aufweisen, aneinander anliegen und die Schneide bilden.

Alternativ ist es auch möglich, jedem Schneidrad die Form eines Kegelstumpfs zu verleihen, wobei der Umfang der größeren Grundfläche die Schneide bildet.

Darüber hinaus besteht bei der erfindungsgemäßen Konzeption der Vorteil, daß die Schneidräder aus einem anderen Material hergestellt werden können als der Hebelmechanismus. Vorzugsweise werden die Schneidräder aus Hartmetall hergestellt, dessen Eigenschaften besonders gut auf die an die Beißwerkzeuge gestellten Anforderungen abgestimmt sind. Obgleich Hartmetall sehr teuer ist, fällt sein Preis kaum ins Gewicht, denn es werden für die Schneidräder nur geringe Materialmengen benötigt. Der Hebelmechanismus kann dagegen aus relativ preiswertem Material gefertigt werden, welches nur die geforderten mechanischen Anforderungen zu erfüllen braucht.

Bei der Ausbildung des Hebelmechanismus kann auf an sich bekannte und bewährte Konstruktionen zurückgegriffen werden, bei denen beispielsweise jeweils ein Betätigungshebel und ein Druckhebel aus einem Stück bestehen und einen zweiarmigen Hebel bilden, wobei jeweils zwei zweiarmige Hebel über eine gemeinsame Drehachse miteinander verbunden sind.

Bei einer solchen Hebelkonstruktion können die Schneidräder an den der Drehachse abgewandten Stirnflächen der Druckhebel angeordnet sein, wobei die Achsen der Schneidräder etwa senkrecht zu den Stirnflächen der Druckhebel liegen und in der Beißposition der Schneidräder eine etwa parallel zueinander ausgerichtete Lage einnehmen.

Alternativ können die Schneidräder aber auch an den Seitenflanken der Druckhebel nahe deren der Drehachse abgewandten Stirnenden angeordnet sein, wobei die Schneidräder etwa in einer gemeinsamen Ebene liegen und ihre Achsen etwa parallel zueinander und parallel zu der Drehachse der Hebel verlaufen.

Die erfindungsgemäße Beißzange kann sowohl in den der Drehachse abgewandten Stirnflächen der Druckhebel als auch senkrecht dazu in den Seitenflanken der Druckhebel Gewindebohrungen aufweisen, um das jeweilige Schneidradpaar je nach Bedarf und Wunsch der Bedienungsperson in den beiden oben beschriebenen Stellungen selbst anbringen zu können. Eine solche Ausführungsform der Beißzange kann also wahlweise auf das eine oder andere Konstruktionsprinzip eingestellt werden.

Bei einer Ausführung der Schneidräder mit auf beiden Seiten vorgesehenen Abschrägungen sollte auf der dem jeweiligen Druckhebel abgewandten Seite nur eine kurze Abschrägung vorgesehen sein, um das Ansetzen der Schneiden auf einer vorgezeichneten Linie zu erleichtern.

Wenn die Schneidräder dagegen die Querschnittsform eines Kegelstumpfs aufweisen, sollte die die Schneide bildende größere Grundfläche auf der dem jeweiligen Druckhebel abgewandten Seite liegen, um ebenfalls eine gute Sicht für die Bedienungsperson zu schaffen.

Hinter den Beißwerkzeugen, und zwar auf derjenigen Seite, zu der die abgetrennten Splitter fliegen, ist ein Auffangbehälter für die Splitter vorgesehen. Dadurch ist ein sauberes Arbeiten mit der erfindungsgemäßen Beißzange möglich, ohne daß die Splitter in den Raum gelangen und Personen verletzen können.

Bei einer Ausführungsform der Beißzange, bei der die Schneidräder an den Seitenflanken der Druckhebel angeordnet sind, besteht der Auffangbehälter zweckmäßig aus einem Kunststoffrohrkrümmer, an dessen der Beißzange abgewandter Seite ein Sammelbeutel aus flexiblem Material befestigt ist. Wenn die Beißzange so betätigt wird, daß die Schneidräder oben und unten an einer Glasplatte angreifen, schließt sich hinter den Schneidrädern zunächst ein horizontaler Abschnitt des Rohrkrümmers an, während der abgekrümmte Bereich nach unten weist.

Zweckmäßig ist der Rohrkrümmer im Bereich seines Befestigungsendes mit einer Manschette versehen, in der der Rohrkrümmer drehbar gelagert ist. Auf diese Weise kann der Rohrkrümmer unabhängig von der Arbeitslage der Beißwerkzeuge immer so gestellt werden, daß der Sammelbeutel nach unten hängt.

Der Auffangbehälter kann an seinem Aufnahmeende mit einer Drahtspange versehen sein, deren Halterungsenden an den Arbeitsschenkeln der Beißzange befestigt sind.

Die Halterungsenden der Drahtspange können mit axial vorspringenden Stiften versehen sein, die in entsprechende Bohrungen in den Druckschenkeln einsteckbar sind.

Die Erfindung ist in der Zeichnung beispielsweise veranschaulicht und im nachstehenden im einzelnen anhand der Zeichnung beschrieben. Es zeigen:
- Fig. 1: die Seitenansicht einer ersten Ausführungsform einer Beißzange,
- Fig. 2: die Ansicht II aus Fig. 1,
- Fig. 3: die Ansicht einer anderen Ausführungsform einer Beißzange,
- Fig. 4: die Ansicht IV aus Fig. 3,
- Fig. 5: die gleiche Ansicht wie Fig. 4 mit abgewandelten Schneidrädern,
- Fig. 6: die Ansicht einer Beißzange wie Fig. 3 mit einem zusätzlich angesetzten Auffangbehälter für Splitter, und
- Fig. 7: eine Seitenansicht der Ausführungsform gemäß Fig. 6.

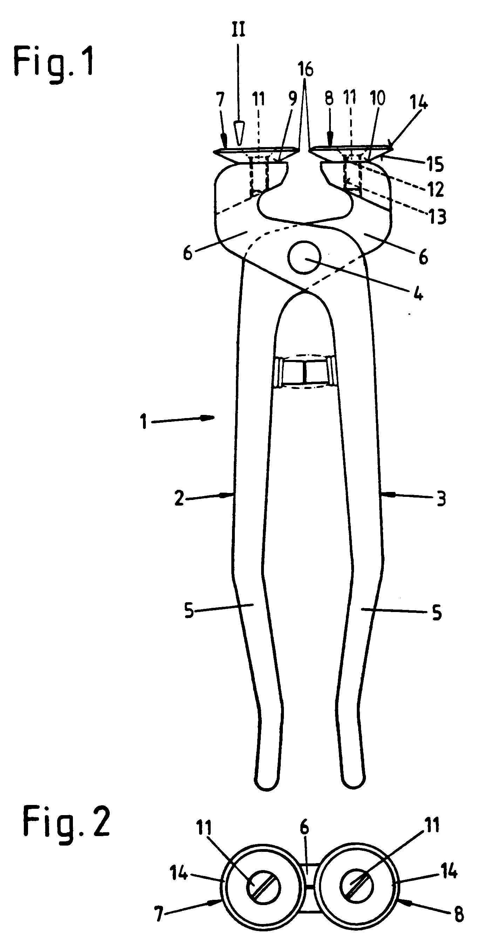

Nach Fig. 1 und 2 der Zeichnung besteht die Beißzange 1 aus je zwei zweiarmigen Hebeln 2 und 3, die in einer gemeinsamen Drehachse 4 miteinander verbunden sind. Bei dieser zangenartigen Konstruktion besteht jeder zweiarmige Hebel 2 bzw. 3 aus einem längeren Betätigungshebel 5 sowie einem kürzeren Druckhebel 6. In der Drehachse 4 kreuzen sich die beiden zweiarmigen Hebel, so daß ein Zusammendrücken der beiden Betätigungshebel 5 auch ein Zusammendrücken der beiden Druckhebel 6 bewirkt.

Die Beißwerkzeuge bestehen aus zwei Schneidrädern 7 und 8, die an den der Drehachse 4 abgewandten Stirnflächen 9 bzw. 10 der Druckhebel 6 angeordnet sind. Zur Befestigung der Schneidräder 7 und 8 dienen Schrauben 11, die durch mittige Bohrungen 12 der Schneidräder 7 und 8 hindurchgreifen. Die Gewindeenden der Schrauben 11 sind in Gewindebohrungen 13 eingeschraubt, die senkrecht in die Stirnflächen 9 bzw. 10 der Druckhebel 6 eingearbeitet sind.

Die Gewindebohrungen 13 verlaufen senkrecht zu den Stirnflächen der Druckhebel 6 und nehmen in der Beißposition der Schneidräder 7 und 8 eine parallel zueinander ausgerichtete Lage ein.

Die Schneidräder 7 und 8 sind auf beiden Seiten mit je einer Abschrägung 14 bzw. 15 versehen, wobei die den Stirnflächen 9 bzw. 10 abgewandten Abschrägungen 14 relativ kurz ausgebildet sind, damit die jeweilige Betätigungsperson das Ansetzen der Schneiden 16 auf der Fliese bzw. dem Glas ungehindert beobachten kann.

Um zu vermeiden, daß die beiden Schneiden 16 der Schneidräder 7 und 8 ungewollt aufeinanderstoßen, sind zwischen den Betätigungshebeln 5 elastische Puffer 17 angeordnet.

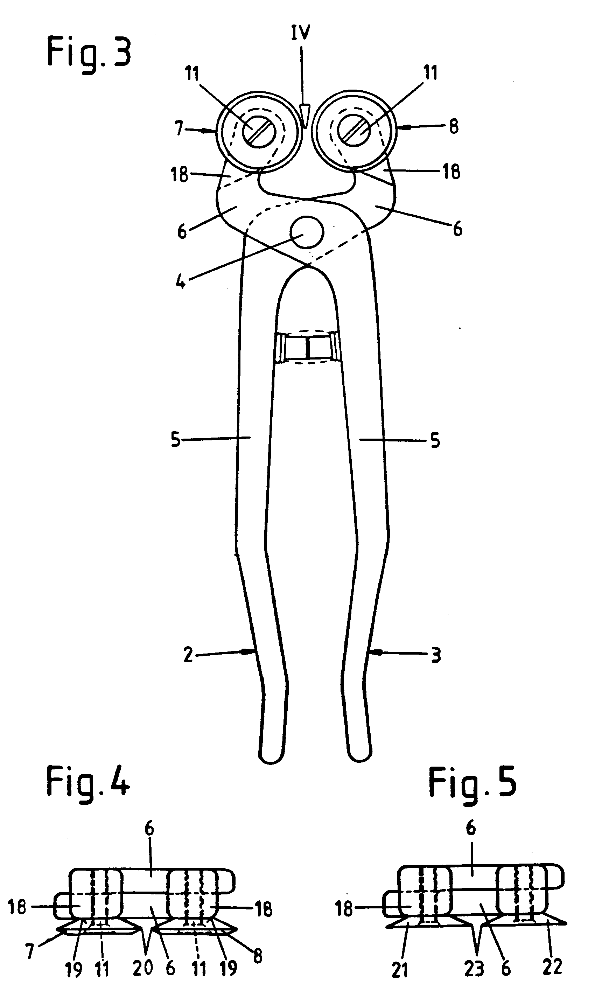

Bei dem in Fig. 3 und 4 dargestellten Ausführungsbeispiel ist die Konstruktion des Hebelmechanismus ähnlich ausgebildet wie bei dem Ausführungsbeispiel gemäß Fig. 1 und 2. Um die Beschreibung zu erleichtern, sind für gleiche Teile gleiche Positionszahlen verwendet worden.

Der Hebelmechanismus besteht wiederum aus zwei sich kreuzenden zweiarmigen Hebeln 2 und 3, die in einer gemeinsamen Drehachse 4 miteinander verbunden sind.

Während die Betätigungshebel 5 in gleicher Weise ausgebildet sind wie bei dem Ausführungsbeispiel gemäß Fig. 1 und 2, weisen die Druckhebel eine etwas flachere Gestalt auf. Lediglich an ihren Enden sind die Druckhebel 6 mit Verdickungen 18 versehen, bei denen zumindest auf einer Seite die Seitenflanken 19 in derselben Ebene liegen. An diesen Seitenflanken 19 der Druckhebel 6 sind die Schneidräder 7 bzw. 8 derart angebracht, daß ihre Schneiden 20 in einer gemeinsamen Ebene liegen. Ihre Achsen, die wiederum durch Schrauben 11 gebildet sind, verlaufen genau parallel zueinander und parallel zu der Drehachse 4 der Hebelkonstruktion.

Im übrigen sind die Schneidräder 7 und 8 in genau der gleichen Weise ausgebildet wie bei dem in Fig. 1 und 2 dargestellten Ausführungsbeispiel. Ihre Anordnung an den Druckhebeln 6 ist jedoch um 90° gegenüber dem in Fig. 1 und 2 dargestellten Ausführungsbeispiel versetzt.

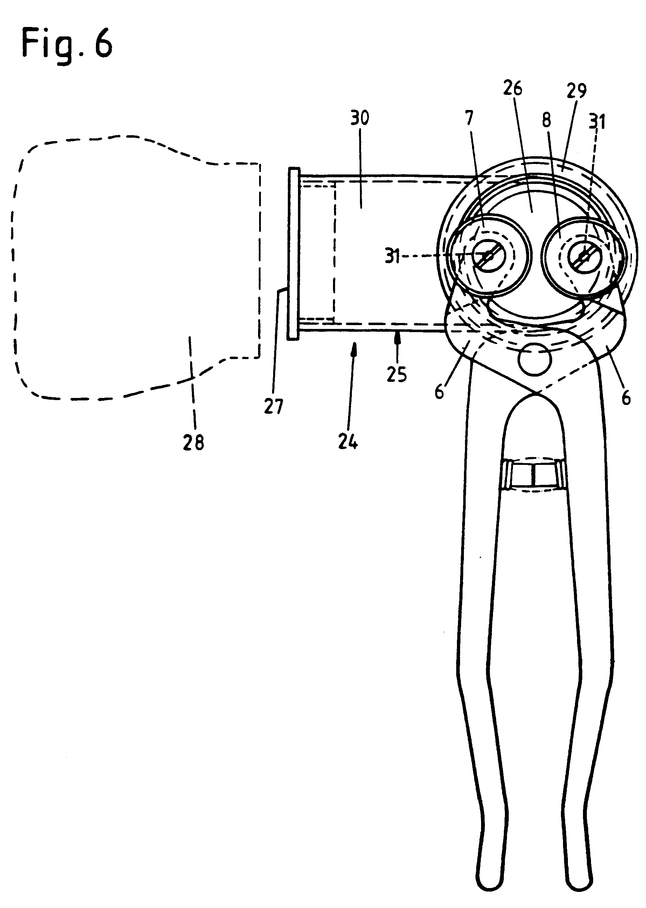

Bei dem in Fig. 5 dargestellten Ausführungsbeispiel sind die Schneidräder 21 und 22 etwas abgewandelt. Im Querschnitt weisen die Schneidräder 21 und 22 die Form eines Kegelstumpfs auf, wobei der Umfang der größeren Grundfläche die jeweilige Schneide 23 bildet. Die Schneidräder 21 und 22 können sowohl bei dem in Fig. 1 und 2 als auch bei dem in Fig. 3 und 4 dargestellten Ausführungsbeispiel verwendet werden. Bei beiden Konstruktionen liegt die Schneide 23 auf der dem jeweiligen Druckhebel 6 abgewandten Seite, so daß auch bei diesem Ausführungsbeispiel das Ansetzen des Werkzeugs an der Fliese bzw. dem Glas gut eingesehen werden kann.

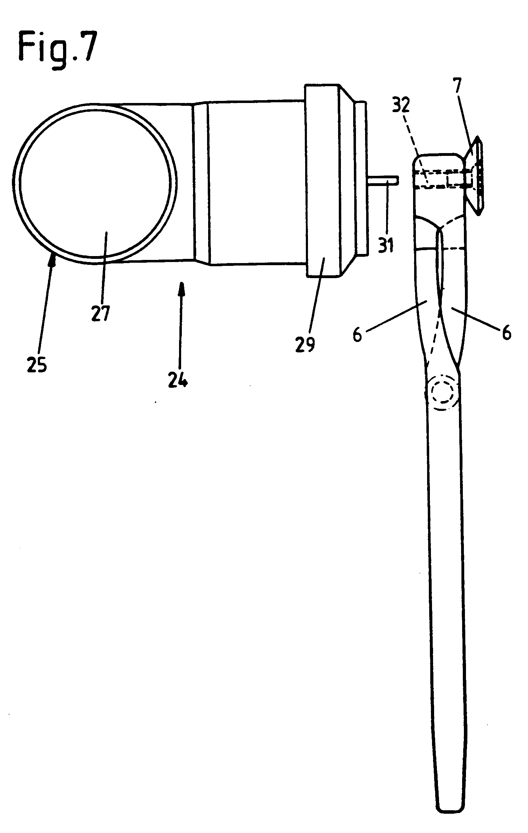

In Fig. 6 und 7 ist eine Beißzange dargestellt, die der in Fig. 3 dargestellten Ausführungsform entspricht. Die Schneidräder 7 und 8 sind dabei an den Seitenflanken der Druckhebel 6 angeordnet.

Hinter den Schneidrädern 7 und 8 ist ein Auffangbehälter 24 für die abgetrennten Splitter befestigt. Der Auffangbehälter 24 besteht aus einem Kunststoff-Rohrkrümmer 25, dessen Eingangsöffnung 26 in einem kurzen Abstand hinter den Schneidrädern 7 und 8 angeordnet ist, und an dessen Ausgangsöffnung 27, die gegenüber der Eingangsöffnung um 90° versetzt ist, ein Sammelbeutel 28 aus flexiblem Material sitzt.

Das Befestigungsende des Rohrkrümmers 25 an der Beißzange besteht aus einer Manschette 29, in der der Rohrkrümmer 25 drehbar gelagert ist, so daß der Rohrkrümmer in jeder Arbeitslage der Beißzange so eingestellt werden kann, daß der Schenkel 30, an dem der Sammelbeutel 28 sitzt, nach unten weist.

An der Manschette 29 sitzt eine in der Zeichnung nicht näher dargestellte Drahtspange, die mit zwei elastisch federnden Halterungsenden versehen ist. Die Halterungsenden bestehen aus axial vorspringenden Stiften 31, die in Bohrungen, die in den Druckschenkeln 6 vorgesehen sind, eingerastet werden. Bei dem in der Zeichnung dargestellten Ausführungsbeispiel werden die Stifte 31 auf der den Schneidrädern 7 und 8 abgewandten Seite der Druckschenkel 6 in die Gewindebohrungen 32 eingesteckt, in der von der entgegengesetzten Seite her die Schrauben 11 zur Halterung der Schneidräder 7 und 8 eingedreht werden.

## Patentansprüche

1. Beißzange, insbesondere zum Zertrennen von Glasscheiben, Fliesen und dergleichen, mit zwei langen Betätigungshebeln, zwei kürzeren Druckhebeln sowie an den Arbeitsenden der Druckhebel lösbar befestigten Beißwerkzeugen, die mit aufeinander zu gerichteten und aufeinander zu und voneinander weg bewegbaren Schneiden versehen sind, **dadurch gekennzeichnet**, daß die Beißwerkzeuge aus Schneidrädern (7, 8; 21, 22) bestehen und daß die Schneidräder (7, 8; 21, 22) in verschiedenen oder beliebigen Rotationsstellungen relativ zu den Arbeitsenden der Druckhebel (6) befestigbar sind.

2. Beißzange nach Anspruch 1, **dadurch gekennzeichnet**, daß die Schneidräder (7, 8; 21, 22) eine mittige Bohrung (12) aufweisen und mit Hilfe von je einer Schraube (11) an den Arbeitsenden der Druckhebel (6) festgeschraubt sind.

3. Beißzange nach Anspruch 1 oder 2, **dadurch gekennzeichnet**, daß jedes Schneidrad (7, 8; 21, 22) eine rundumlaufende, auf dem äußeren Umfang eines Kreises liegende Schneide (16; 20; 23) aufweist.

4. Beißzange nach Anspruch 3, **dadurch gekennzeichnet**, daß jedes Schneidrad (7, 8) von der umlaufenden Schneide (16; 20) aus nach beiden Seiten geneigte Abschrägungen (14, 15) aufweist.

5. Beißzange nach Anspruch 4, **dadurch gekennzeichnet**, daß jedes Schneidrad (7, 8) die Form eines aus zwei Kegelstümpfen zusammengesetzten Rundlings aufweist, wobei die beiden Grundflächen den gleichen Durchmesser aufweisen, aneinander anliegen und die Schneide (16; 20) bilden.

6. Beißzange nach Anspruch 3, **dadurch gekennzeichnet**, daß jedes Schneidrad (21, 22) die Form eines Kegelstumpfs aufweist, wobei der Umfang der größeren Grundfläche die Schneide (23) bildet.

7. Beißzange nach einem der Ansprüche 1 bis 6, **dadurch gekennzeichnet**, daß die Schneidräder (7, 8; 21, 22) aus Hartmetall bestehen.

8. Beißzange nach einem der Ansprüche 1 bis 7, **dadurch gekennzeichnet**, daß jeweils ein Betätigungshebel und ein Druckhebel aus einem Stück bestehen und einen zweiarmigen Hebel bilden, wobei die beiden zweiarmigen Hebel über eine gemeinsame Drehachse miteinander verbunden sind, und daß die Schneidräder (7, 8; 21, 22) an den der Drehachse (4) abgewandten Stirnflächen (9, 10) der Druckhebel (6) angeordnet sind und daß die Achsen der Schneidräder (7, 8; 21, 22) etwa senkrecht zu den Stirnflächen (9, 10) der Druckhebel (6) liegen.

9. Beißzange nach einem der Ansprüche 1 bis 7, **dadurch gekennzeichnet**, daß jeweils ein Betätigungshebel und ein Druckhebel aus einem Stück bestehen und einen zweiarmigen Hebel bilden, wobei die beiden zweiarmigen Hebel über eine gemeinsame Drehachse miteinander verbunden sind, und daß die Schneidräder (7, 8; 21, 22) an den Seitenflanken (19) der Druckhebel (6) nahe deren der Drehachse (4) abgewandten Stirnenden angeordnet sind, wobei die Schneidräder (7, 8; 21, 22) etwa in einer gemeinsamen Ebene liegen und ihre Achsen etwa parallel zueinander und parallel zu der Drehachse (4) der Hebel verlaufen.

10. Beißzange nach Anspruch 8 und 9, **dadurch gekennzeichnet**, daß sowohl in den der Drehachse (4) abgewandten Stirnflächen (9, 10) der Druckhebel (6) als auch senkrecht dazu in den Seitenflanken (19) der Druckhebel (6) Gewindebohrungen (13) zum wahlweisen Anbringen eines Schneidradpaars vorgesehen sind.

11. Beißzange nach einem der Ansprüche 8 bis 10, **dadurch gekennzeichnet**, daß die Schneidräder (7, 8) auf der dem jeweiligen Druckhebel (6) abgewandten Seite nur eine kurze Abschrägung (14) aufweisen.

12. Beißzange nach einem der Ansprüche 6 bis 10, **dadurch gekennzeichnet**, daß die die Schneide (23) bildende größere Grundfläche des kegelstumpfförmigen Schneidrades (21, 22) auf der dem jeweiligen Druckhebel (6) abgewandten Seite liegt.

13. Beißzange nach einem der Ansprüche 1 bis 12, **dadurch gekennzeichnet**, daß hinter den Beißwerkzeugen ein Auffangbehälter (24) für die abgetrennten Splitter vorgesehen ist.

14. Beißzange nach Anspruch 9 und 13, **dadurch gekennzeichnet**, daß der Auffangbehälter (24) aus einem Kunststoffrohrkrümmer (25) besteht, an dessen der Beißzange abgewandten Seite ein Sammelbeutel (28) aus flexiblem Material befestigt ist.

15. Beißzange nach Anspruch 14, **dadurch gekennzeichnet,** daß der Rohrkrümmer (25) im Bereich seines Befestigungsendes mit einer Manschette (29) versehen ist, in der der Rohrkrümmer (25) drehbar gelagert ist.

16. Beißzange nach einem der Ansprüche 13 bis 15, **dadurch gekennzeichnet**, daß der Auffangbehälter (24) an seinem Aufnahmeende mit einer Drahtspange versehen ist, deren Halterungsenden an den Arbeitsschenkeln (6) der Beißzange befestigbar sind.

17. Beißzange nach Anspruch 16, **dadurch gekennzeichnet**, daß die Halterungsenden der Drahtspange mit axial vorspringenden Stiften (31) versehen sind, die in entsprechende Bohrungen (32) der Druckschenkel (6) einsteckbar sind.

## Claims

1. Pair of pincers, in particular for cutting sheets of glass, tiles and the like, with two long operating levers, two shorter pressure levers, as well as detachable nippers mounted at the working ends of the pressure levers, with cutting edges facing one another and designed in such a way as to be movable both towards and away from one another, **characterised in that** the nippers consist of cutting wheels (7, 8; 21, 22) and that the cutting wheels (7, 8; 21, 22) can be fixed in various or random rotational positions relative to the working ends of the pressure levers (6).

2. Pair of pincers as per Claim 1, **characterised in that** the cutting wheels (7, 8; 21, 22) display a concentrically drilled bore (12) and are each screwed onto the working ends of the pressure levers (6) with the help of a screw (11).

3. Pair of pincers as per Claim 1 or 2, **characterised in that** each cutting wheel (7, 8; 21, 22) displays an all-round cutting edge (16; 20; 23) around the outer circumference of a circle.

4. Pair of pincers as per Claim 3, **characterised in that** each cutting wheel (7, 8) displays bevels (14, 15) inclined on both sides from the all-round cutting edge (16; 20).

5. Pair of pincers as per Claim 4, **characterised in that** each cutting wheel (7, 8) has the form of a rotating member comprised of two truncated cones pressed together, where the two base areas have the same diameter, are in contact with each other and form the cutting edge (16; 20).

6. Pair of pincers as per Claim 3, **characterised in that** each cutting wheel (21, 22) has the form of a truncated cone, where the circumference of the larger base area comprises the cutting edge (23).

7. Pair of pincers as per one of the Claims 1 to 6, **characterised in that** the cutting wheels (7, 8; 21, 22) are made of sintered metal carbide.

8. Pair of pincers as per one of the Claims 1 to 7, **characterised in that** an operating lever and a pressure lever comprise a single part and form a double-armed lever, where the two double-armed levers are connected to one another via a common axis of rotation, and that the cutting wheels (7, 8; 21, 22) are arranged on the face ends (9, 10) of the pressure levers (6) pointing away from the axis of rotation (4), and that the axes of the cutting wheels (7, 8; 21, 22) are located roughly perpendicular to the face ends (9, 10) of the pressure levers (6).

9. Pair of pincers as per one of the Claims 1 to 7, **characterised in that** an operating lever and a pressure lever comprise a single part and form a double-armed lever, where the two double-armed levers are connected to one another via a common axis of rotation, and that the cutting wheels (7, 8; 21, 22) are arranged on the lateral flanks (19) of the pressure levers (6) near to their face ends pointing away from the axis of rotation (4), where the cutting wheels (7, 8; 21, 22) are located in roughly the same plane with their axes running roughly parallel to one another and parallel to the axis of rotation (4) of the levers.

10. Pair of pincers as per Claims 8 and 9, **characterised in that** threaded bores (13) are provided in the face ends (9, 10) of the pressure levers (6) pointing away from the axis of rotation (4) and perpendicular to these in the lateral flanks (19) of the pressure levers (6), to allow optional mounting of a pair of cutting wheels.

11. Pair of pincers as per one of the Claims 8 to 10, **characterised in that** the cutting wheels (7, 8) have only a short bevel (14) on the side facing away from the respective pressure lever (6).

12. Pair of pincers as per one of the Claims 6 to 10, **characterised in that** the larger base area of the truncated cone-shaped cutting wheel (21, 22) comprising the cutting edge (23) is located on the side facing away from the respective pressure lever (6).

13. Pair of pincers as per one of the Claims 1 to 12, **characterised in that** a collector (24) is provided behind the nippers for the separated chips.

14. Pair of pincers as per Claims 9 and 13, **characterised in that** the collector (24) consists of a plastic elbow (25), with a collecting bag (28) made of flexible material attached to the side of the elbow facing away from the pincers.

15. Pair of pincers as per Claim 14, **characterised in that** the elbow (25) is provided with a collar (29) in the region of its mounting end, in which the elbow (25) is located in rotatable fashion.

16. Pair of pincers as per one of the Claims 13 to 15, **characterised in that** the collector (24) is provided with a wire clasp at its retaining end, the mounting ends of which can be attached to the pressure levers (6) of the pair of pincers.

17. Pair of pincers as per Claim 16, **characterised in that** the mounting ends of the wire clasp are provided with axially projecting pins (31), which can be inserted into corresponding bores (32) in the pressure levers (6).

## Revendications

1. Tenaille, en particulier pour couper des panneaux de verre, carreaux et similaires, ayant deux leviers de manoeuvre longs, deux leviers de pression plus courts ainsi que des outils coupants fixés de façon amovible aux extrémités de travail des leviers de pression, lesquels outils coupants sont pourvus de tranchants dirigés l'un vers l'autre et pouvant être approchés l'un vers l'autre et être éloignés l'un de l'autre, tenaille caractérisée par ce que les outils coupants sont constitués par des molettes coupantes (7, 8; 21, 22) et que les molettes coupantes (7, 8; 21, 22) peuvent être fixées en différentes ou quelconques positions de rotation par rapport aux extrémités de travail des leviers de pression (6).

2. Tenaille suivant revendication 1, caractérisée par ce que les molettes coupantes (7, 8; 21, 22) présentent un trou central (12) et qu'elles sont fixées aux extrémités des leviers de pression (6) au moyen d'une vis (11) respectivement.

3. Tenaille suivant revendication 1 ou 2, caractérisée par ce que chaque molette coupante (7, 8; 21, 22) présente un tranchant circulaire (16; 20; 23) situé sur le pourtour d'un cercle.

4. Tenaille suivant revendication 3, caractérisée par ce que chaque molette coupante (7, 8; 21, 22) présente des biseaux (14, 15) inclinés des deux côtes du tranchant circulaire (16; 20).

5. Tenaille suivant revendication 4, caractérisée par ce que chaque molette coupante (7, 8) présente la forme d'un rond composé de deux cônes tronqués, où les deux surfaces de base présentent le même diamètre, adhèrent l'une à l'autre et forment le tranchant (16; 20).

6. Tenaille suivant revendication 3, caractérisée par ce que chaque molette coupante (21, 22) présente la forme d'un cône tronqué, où la circonférence de la surface de base plus grande constitue le tranchant (23).

7. Tenaille suivant une des revendications 1 à 6, caractérisée par ce que les molettes coupantes (7, 8; 21, 22) sont en carbure.

8. Tenaille suivant une des revendications 1 à 7, caractérisée par ce que respectivement un levier de manoeuvre et un levier de pression constituent une seule pièce et forment un levier à deux bras, les deux leviers à deux bras étant joints par un axe de rotation commun, et que les molettes coupantes (7, 8; 21, 22) sont disposées aux faces frontales (9, 10) détournées de l'axe de rotation (4), et que les axes des molettes coupantes (7, 8; 21, 22) sont situés à peu près verticalement par rapport aux faces frontales (9, 10) des leviers de pression (6).

9. Tenaille suivant une des revendications 1 à 7, caractérisée par ce que respectivement un levier de manoeuvre et un levier de pression constituent une seule pièce et forment un levier à deux bras, les deux leviers à deux bras étant joints par un axe de rotation commun, et que les molettes coupantes (7, 8; 21, 22) sont disposées aux flancs latéraux (19) des leviers de pression (6), près de leurs extrémités frontales détournées de l'axe de rotation (4), où les molettes coupantes (7, 8; 21, 22) sont situées à peu près dans un plan commun et oû l'allure de leurs axes est à peu près parallèle entre eux et parallèle à l'axe de rotation (4) des leviers.

10. Tenaille suivant revendications 8 et 9, caractérisée par ce que dans les faces frontales (9, 10) détournées de l'axe de rotation (4) des leviers de pression aussi bien que, verticalement aux dites faces frontales, dans les flancs latéraux (19) des leviers de pression (6) sont prévus des trous taraudés (13) pour le montage facultatif d'une paire de molettes coupantes.

11. Tenaille suivant une des revendications 8 à 10, caractérisée par ce que les molettes coupantes (7, 8), sur la face détournée du levier de pression (6) respectif, ne présentent qu'un chanfrein court (14).

12. Tenaille suivant une des revendications 6 à 10, caractérisée par ce que la surface de base plus grande formant le tranchant (23) de la molette coupante tronconique (21, 22) se trouve du côté détourné du levier de pression (6) respectif.

13. Tenaille suivant une des revendications 1 à 12, caractérisée par ce que derrière les outils coupants, il est prévu un récipient collecteur (24) pour les éclats coupés.

14. Tenaille suivant revendications 9 et 13, caractérisée par ce que le récipient collecteur (24) est constitué par un coude (25) en matière plastique, au bout détourné de la tenaille duquel est fixé un sachet collecteur (28) en matière souple.

15. Tenaille suivant revendication 14, caractérisée par ce que le coude (25), dans la zone de son bout de fixation, est muni d'une garniture (29), dans laquelle le coude (25) est logé de façon tournante.

16. Tenaille suivant une des revendications 13 à 15, caractérisée par ce que le récipient collecteur (24) est pourvu, à son bout de fixation, d'une agrafe de fil de fer dont les extrémités d'attache peuvent être fixées aux branches de travail (6) de la tenaille.

17. Tenaille suivant revendication 16, caractérisée par ce que les extrémités d'attache de l'agrafe de fil de fer sont pourvues de broches (31) saillant axialement et pouvant être enfichées dans des trous (32) correspondants des leviers de pression (6).
